# EUROPEAN PATENT SPECIFICATION

(11) **EP 3 636 567 B1**
(45) Date of publication and mention of the grant of the patent: **21.04.2021**
(21) Application number: 18199548.1
(22) Date of filing: 10.10.2018
(51) Int. Cl.: B65H 1/26, B65H 5/00, B65H 7/04

(54) **SHEET STACK HANDLING APPARATUS FOR LOADING BY BOTH HUMAN AND ROBOT**
BLATTSTAPELHANDHABUNGSVORRICHTUNG ZUM BELADEN DURCH SOWOHL MENSCHEN ALS AUCH ROBOTER
APPAREIL DE MANIPULATION DE PILES DE FEUILLES POUR LE CHARGEMENT PAR LES HUMAINS ET LES ROBOTS

(43) Date of publication of application: 15.04.2020
(73) Proprietor: Canon Production Printing Holding B.V., 5914 HH Venlo (NL)
(72) Inventor: CALUGAR, Camelia, 5914 Venlo (NL); HEKKENS, Ruben T.H., 5914 Venlo (NL); VERHOFSTAD, Wilhelmus J.E.G, 5914 Venlo (NL); VAN DUN, Josephus A.M., 5914 Venlo (NL)
(74) Representative: Canon Production Printing IP Department

(56) References cited:
- EP-A2- 0 914 968
- WO-A1-2008/114702
- US-A1- 2005 042 072
- US-A1- 2012 288 354

## Description

### FIELD OF THE INVENTION

The present invention generally pertains to an assembly of a sheet stack handling apparatus and a sheet stack transporting robot as well as to such an apparatus and robot themselves. The present invention further relates to a method for a fluid delivery of a sheet stack of print medium sheets between the sheet stack transporting robot and a sheet stack support of the sheet stack handling apparatus.

### BACKGROUND ART

Sheet printers generally comprise a sheet stack handling apparatus at the input and/or output side of the printer. The sheet stack handling apparatus may be a sheet input device for holding a sheet stack and individually separating and transferring sheets from said sheet stack onto a transport path of the printer. The sheet stack handling apparatus may be further be a sheet stacker for receiving individual sheets and stacking these sheets into sheet stacks. Said sheet stack handling apparatuses have limited capacity and thus require regular filling with new sheet stacks or removal of formed sheet stacks. Dependent on the print job different print media types may need to be loaded. Completed sheet stacks generally require further processing dependent on the intended application. For large arrays of multiple printers certain operators desire to automate sheet stack filling and removal. While it is known to load or unload printers by means of a conveyor system connecting a central storage supply to each sheet stack handling apparatus or a localized robot arm, these known supply solutions generally lack the flexibility to timely deliver the required print media type to a printer, especially when the printer array is processing large numbers of different print jobs with large variation in media type. The known supply solution are generally costly and take up a relatively large volume of space compared to the printers.

US2005042072A1 discloses a sheet or sheet stack handling system for performing at least one operation on successive sheets or stacks of sheets, and interface for the same, wherein the document handling system includes at least two modules selected from a group consisting of an elevator transfer station, a modular transfer station, a storage station, a transportation cart, and a modular processing station. When more than one modular processing station are coupled to form the document handling system, the system may be utilized to perform a series of operations on successive sheets or stacks of sheets. Alternately, the individual processing stations or a group of the processing stations may be utilized to perform only certain functions on the sheets. The modules each contain a plurality of parallel, spaced, elongated support surfaces that form a sheet support surface. The parallel, spaced, elongated support surfaces of the two modules are sized and disposed that they may intermesh to allow a transfer of sheet stacks between the modules when one set of parallel support surfaces is moved upward or downward relative to the other.

### SUMMARY OF THE INVENTION

It is an object of the present invention to provide versatile system for transferring sheet stacks to and/or from a printer.

In a first aspect of the present invention, an assembly of a sheet stack handling apparatus and a sheet stack transporting robot is provided. The sheet stack transporting robot comprises:
- a sheet stack support for supporting a stack of print medium sheets;
- a driving mechanism for transporting the sheet stack transporting robot with respect to the sheet stack handling apparatus;
- a wireless signal emitter configured to emit an identification signal for the sheet stack transporting robot.
The sheet stack handling apparatus comprises:
- a sheet stack support for supporting a stack of print medium sheets;
- an access door through which access door when in an open position the sheet stack support of the sheet stack handling apparatus is accessible;
- an access door actuator for opening and closing the access door;
- a wireless signal receiver configured to receive the identification signal from the sheet stack transporting robot;
- a controller configured for:
- determining a print medium identifier for a print medium designated to the sheet stack support of the sheet stack handling apparatus;
- comparing the identification signal received by the wireless signal receiver to the print medium identifier; and
- controlling the access door actuator to open the access door if the identification signal corresponds to the print medium identifier.
The sheet stack transporting robot may be loaded with the desired print medium, for example from a storage supply. The driving mechanism provides the sheet stack transporting robot with independent movement with respect to the sheet stack handling apparatus. The sheet stack transporting robot is thus free to move between a print media supply and one or more sheet stack handling apparatuses. The independent movement of the sheet stack transporting robot provides versatility in transferring sheet stacks to or from the sheet stack handling apparatus. The sheet stack transporting robot communicates wirelessly with the sheet stack handling apparatus. From the identification signal the controller of the sheet stack handling apparatus verifies that the correct print medium is being supplied by the sheet stack transporting robot, thereby reducing errors in media type loading. The identification signal may comprise a print medium identifier or a robot identifier which allows the controller to determine which print medium is loaded on the corresponding robot by referring to a look-up table which couples loaded print media to individual robots. Upon positive identification the controller opens the sheet stack handling apparatus to the sheet stack transporting robot, which transfers the sheet stack onto the sheet stack support of the sheet stack handling apparatus. As such a versatile assembly is obtained.

Preferred embodiments are subject of the dependent claims.

In an embodiment, the sheet stack handling apparatus is configured for being supported on a floor and the driving mechanism is arranged for moving the sheet stack transporting robot over said floor with respect to the sheet stack handling apparatus. The driving mechanism is configured to move the sheet stack transporting robot in its entirety. The driving mechanism comprises for example a motor and a plurality of wheels drivable by said motor. Other suitable driving mechanism may be applied.

In another embodiment, the sheet stack transporting robot comprises a wireless signal receiver configured to receive sheet stack transfer information for determining a time period for transferring a sheet stack of a predetermined media type to a predetermined sheet stack handling apparatus. Basically, the sheet stack transporting robot is remote controlled via a controller, for example the controller of the printer or the sheet stack handling apparatus. Alternatively, a central processor may be provided to oversee and schedule print jobs for a multi-printer array. The sheet stack transporting robot is configured to transfer the predetermined sheet stack to the sheet stack handling apparatus within the determined time period. To verify the correctness of the print media type the controller compares the identification signal from the sheet stack transporting robot to the print media identifier.

In a further embodiment, the sheet stack handling apparatus is accessible to the sheet stack transporting robot when the access door is in its open position. The sheet stack handling apparatus further comprises a sheet stack chamber adjacent the access door and configured to receive the sheet stack support of the sheet stack transporting robot as well as a sheet stack positioned on said sheet stack support. The bottom surface of the sheet stack chamber is preferably defined by the sheet stack support of the sheet stack handling apparatus.

In an embodiment, the sheet stack handling apparatus with the access door in the open position comprises an access opening dimensioned to pass through it the sheet stack support of the sheet stack transporting robot as well as a sheet stack positioned on it.

In another embodiment, the sheet stack handling apparatus defines a drive-in chamber configured and/or dimensioned to at least partially receive the sheet stack transporting robot. Preferably, the drive-in chamber is during use positioned below the sheet stack support of the sheet stack handling apparatus. The sheet stack chamber for receiving the sheet stack is therein preferably positioned above the sheet stack support of the sheet stack handling apparatus. To transfer a sheet stack the sheet stack transporting robot at least partially enters the drive-in chamber. As the sheet stack transporting robot moves across the floor, the drive-in chamber during use preferably extends between the sheet stack support of the sheet stack handling apparatus and said floor. The access opening is sufficiently wide and high to allow the sheet stack transporting robot and the sheet stack to pass through it. This allows the sheet stack to be positioned on the robot in a stabile manner. No counter-weights are required to avoid tilting of the sheet stack transporting robot under the weight of the sheet stack. The dimensions of the sheet stack transporting robot can thus be kept compact.

In an embodiment, the sheet stack handling apparatus further comprises a stack support actuator for moving the sheet stack support of the sheet stack handling apparatus in a height direction perpendicular to a plane of the sheet stack support, and wherein the controller is configured to raise the sheet stack support of the sheet stack handling apparatus upwards from a predetermined robot access position to transfer a sheet stack from the sheet stack support of the sheet stack transport robot to the sheet stack support of the sheet stack handling apparatus. The height direction is preferably parallel to the direction of gravity during use. When the access door is open, the sheet stack support of the sheet stack handling apparatus is in the robot access position. In the robot access position the drive-in chamber is preferably formed below the sheet stack support of the sheet stack handling apparatus. The sheet stack transporting robot is configured to position its sheet stack support at a robot entry position. The sheet stack support of the sheet stack transporting robot at the robot entry position is above (i.e. higher than) the sheet stack support of the sheet stack handling apparatus at the robot access position. The sheet stack is thereby lifted over the sheet stack support of the sheet stack handling apparatus. As such, the sheet stack may be positioned in a suitable sheet stack transfer position by positioning the sheet stack transporting robot with respect to the sheet stack handling apparatus.

In a further embodiment, each sheet stack support comprises a plurality of substantially parallel, longitudinal surface segments spaced apart from one another. To transfer the sheet stack, the sheet stack supports are arranged to pass through one another when moving in the height direction with respect to one another. Thereto each sheet stack support is provided with parallel surface segments, for example in the form of fingers. The surface segments are positioned at a distance from one another when viewed perpendicular to and parallel to the plane of said surface segments. Each pair of neighboring surface segments of one of the sheet stack supports is separated from one another by a spacing. The spacing is dimensioned to allow a surface segment of the other one of the sheet stack supports to pass through it. Basically the spacing of the one is wider than a width of the surface segment of the other one of the sheet stack supports. Preferably the spacing is not wider than 5 cm to prevent sagging of the sheet stack. The longitudinal direction of the surface segments extends perpendicular to the access opening in the inserting direction wherein the sheet stack is inserted into the sheet stack chamber during transfer. As such a simple mechanism is provided to transfer sheet stacks without damaging or deforming sheets.

In an embodiment, the sheet stack handling apparatus comprises a robot guide which determines a loading position for the sheet stack transporting robot in the drive-in chamber. The robot guide positions the sheet stack transporting robot in a predetermined end position, such that the surface segments of the sheet stack transporting robot do not overlap with the surface segments of the sheet stack handling apparatus, when viewed in the height direction. As such the sheet stack transporting robot is aligned into a proper position as it enters the drive-in chamber of the sheet stack handling apparatus. The robot guide may for example comprise a tapered channel, when viewed from above.

In another embodiment, at least one of the sheet stack supports comprises a plurality of parallel longitudinal support fingers spaced apart from one another in a width direction perpendicular to a longitudinal direction of the fingers. The width direction is perpendicular to the inserting direction wherein the sheet stack is moved into the sheet stack chamber.

In a preferred embodiment, the sheet stack handling apparatus further comprises a tray slideably mounted on a frame of the sheet stack handling apparatus, wherein the sheet stack support of the sheet stack handling apparatus is provided, and wherein the access door forms a front panel of the tray with respect to a sliding direction of the tray. Trays are commonly applied in sheet stack handling apparatuses as these are easily accessible by operators while offering a space efficient design of the sheet stack handling apparatus. The tray comprises the sheet stack support and the access door. In the closed position the access door preferably seals or closes the sheet stack chamber such that the sheet stack stored inside can be kept under controlled conditions, such as humidity and temperature. By configuring the tray for robot access, the sheet stack handling apparatus may retain substantially the same functionality known to the operator while also offering the advantage of loading by robot. The tray may still be manually loaded by the operator in a familiar manner, resulting in a versatile system. Additionally, manufacturing is simplified as only a single type of sheet stack handling apparatus needs to be produced to for operators interested in robot-based system as well as for operator which for costs reasons desire manual loading. As such the overall production costs for a sheet stack handling apparatus can be reduced.

In an embodiment, wherein the front panel is provided on a side of the tray perpendicular with respect to the sliding direction of the tray and an access opening for the sheet stack transporting robot is arranged on a side of the tray parallel to the sliding direction. The access door and the access opening are on perpendicular sides of the sheet stack support. Preferably, the sheet stack support of the tray is substantially rectangular. The front panel or access door is then arranged at the front end of the tray with respect to the sliding direction. The access opening is positioned at an adjacent side of the tray, preferably at a substantially straight angle with respect to the front panel. As the tray slides open, the access opening is formed between the front panel and the frame of sheet stack handling apparatus. The access opening is positioned at the robot access side of the sheet stack support on the tray. Since the access opening in the open position is substantially free, the sheet stack transporting robot may access the sheet stack support of the tray unhindered. As such the tray may be easily configured for sheets stack transfer by robot.

In a further embodiment, the sheet stack handling apparatus further comprises:
- a sheet stack confinement member extending in a sheet stacking direction perpendicular to a plane of the sheet stack support of the sheet stack handling apparatus, which sheet stack confinement member is positioned within a frame of the sheet stack handling apparatus when the access door is in the open position; and
- a confinement member actuator system for moving the sheet stack confinement member to a confining position wherein the sheet stack confinement member is positioned to at least partially contact a side of a top sheet of the sheet stack on the sheet stack support of the sheet stack handling apparatus when the access door in its closed position.
For reliable sheet separation the integrity of the sheet stack needs to be preserved. Misalignment of sheets is most likely to occur at the top of the sheet as the average weight pressing on a sheet at the top is low as compared to e.g. the bottom of the stack. Thereto, the sheet stack confinement member is arranged to restrict or prevent movement of sheets in the sheet stack in one or more directions parallel to the plane of the sheets. In a basic example the sheet stack confinement member comprises stop members positioned on opposite side of the sheet stack and at least partially in contact with it. During sheet stack transfer, the access opening (or at least the relevant portions of it depending on the size of the sheet stack) is required to be free to allow the sheet stack to pass through it. The sheet stack confinement member for contacting the sheet stack on the side of the access opening is permanently positioned within the frame or housing. When the access door (and thus the tray) is opened, the access opening is free of said sheet stack confinement member. This allows the sheet stack to be inserted into the sheet stack chamber unhindered by the sheet stack confinement member. After transferring the sheet stack and closing the access door, the sheet stack confinement member is moved into its operative position in contact with the top of the sheet stack. The confinement member actuator system preferably is configured to move the sheet stack confinement member in the height direction, as sheet stack heights may vary per print job. In another embodiment, the confinement member actuator system when the access door is open has moved (or moves) the sheet stack confinement member away from the access opening. The sheet stack confinement member may thereby be temporarily stored to the side of the relevant portion of the access opening.

In an embodiment, the sheet stack support of the sheet stack handling apparatus comprises a robot access side via which robot access side a sheet stack may be transferred between the sheet stack supports of the sheet stack transporting robot and the sheet stack handling apparatus, wherein the sheet stack confinement member is positioned on the robot access side of the sheet stack support when the access door is in the closed position. The sheet stack confinement member may further be arranged to restrict movement of the sheet stack by enclosing the sheet stack between the sheet stack confinement member and a further sheet stack confinement member positioned on an opposite side of the sheet stack support with respect to the sheet stack confinement member. The further sheet stack confinement member may be a stationary member with respect to the sheet stack support of the sheet stack handling apparatus. The further sheet stack confinement member is preferably positioned on a rear side of the sheet stack support of the sheet stack handling apparatus opposite to the robot access side.

In a further embodiment, the sheet stack handling apparatus further comprises a sheet separation suction device mounted on a frame over the sheet stack support of the sheet stack handling apparatus for lifting a top sheet from a sheet stack on said sheet stack support, and wherein the confinement member actuator system is mounted on the frame above the sheet stack support of the sheet stack handling apparatus adjacent the sheet separation suction device. The top sheet is sucked of the sheet stack by the sheet separation suction device and fed into the printer. Generally, the sheet separation suction device, which may for example be a suction transport belt, has a fixed position. Thereto it is mounted on the frame. The frame encloses the sheet stack chamber. The sheet stack support of the sheet stack handling apparatus is moveable in the height direction to position the top of the sheet stack sufficiently near the sheet separation suction device. The confinement member actuator system is mounted on the stationary frame to move the sheet stack confinement member with respect to the frame, preferably in the height direction. The confinement member actuator system is preferably arranged adjacent the sheet separation suction device. The confinement member actuator system is further preferably configured to move the sheet stack confinement member in the height direction as well as in the inserting direction. As such the sheet stack confinement member can be positioned in correspondence to the dimensions of the media type loaded onto the sheet stack support. As such, the sheet stack integrity is maintained during printing operations. Sheets may thus be supplied to the printer without operator interference.

In an embodiment, the sheet stack handling apparatus further comprises:
- a sheet stack size sensor configured to determine a size of a sheet stack on the sheet stack support of the sheet stack handling apparatus, wherein the controller is configured to control the confinement member actuator system to move the sheet stack confinement member at least partially against a side of the sheet stack. The width and length of the sheet stack may be easily determined from pre-stored media type properties. The sheet stack height is however determined by more than the number of sheets in the sheet stack. Factors as temperature, humidity, and other conditions affect the sheet stack height. To avoid collision of the sheet stack the sheet stack size sensor may be configured to determine the sheet stack height. The controller then controls the confinement member actuator system to position the sheet stack confinement member in correspondence with or at the determined sheet stack height after sheet stack transfer. The sheet stack size sensor may further be configured to determine the length and/or width of the sheet stack when viewed in the height direction. This allows the confinement member actuator system to further properly position the sheet stack confinement member in the length and/or width direction. When the tray is being closed the sheet stack confinement member then does not obstruct the sheet stack. With sheet stack size sensor the sheet stack confinement member can thus be properly positioned regardless of the exact position wherein the sheet stack has transferred onto the sheet stack support of the sheet stack handling apparatus.

In another embodiment, the assembly according to the present invention further comprises a further sheet stack confinement member movable by a further confinement member actuator system to confine the sheet stack in a direction substantially perpendicular to a confining direction of the sheet stack confinement member. The sheet stack is preferably confined in both the length and width directions. By implementing two confinement member actuator systems the sheet stack can be confined without operator interference regardless of its size and position on the sheet stack support.

In another embodiment, the assembly according to the present invention further comprises a user interface, wherein the controller is further configured for controlling the access door actuator to open the access door in correspondence to an access signal input via the user interface. The sheet stack handling apparatus as such provides the option of manual sheet stack transfer as well as the option to transfer sheet stacks via a sheet stack transporting robot. Both functionalities are incorporated in a single apparatus, resulting in versatility and low production costs.

In a further embodiment, the sheet stack handling apparatus further comprises a stack support actuator for moving the sheet stack support of the sheet stack handling apparatus in a height direction perpendicular to a plane of the sheet stack support, and wherein the controller is configured to raise the sheet stack support of the sheet stack handling apparatus upwards from a predetermined robot access position to transfer a sheet stack from the sheet stack support of the sheet stack transport robot to the sheet stack support of the sheet stack handling apparatus. To transfer a sheet stack, the sheet stack supports are moved through one another in the height direction. During operation the top of the sheet stack should be positioned near the sheet separation suction device, which is generally performed by raising the sheet stack as it is depleted. Only a single actuator is required when applying the stack support actuator actuator for raising the sheet stack during operation for transfer the sheet stack between the sheet stack supports.

In another embodiment, the sheet stack confinement member is positioned on a robot access side of the sheet stack support of the sheet stack handling apparatus and wherein the confinement member actuator system is configured for moving the sheet stack confinement member between a loading position wherein the robot access side of the sheet stack support of the sheet stack handling apparatus is accessible for transferring a sheet stack from the sheet stack support of the robot to the sheet stack support of the sheet stack handling apparatus and a confining positioning wherein the sheet stack confinement member is positioned to at least partially contact a side of a sheet stack on the sheet stack support of the sheet stack handling apparatus, wherein the controller is further configured for:
- controlling the confinement member actuator system for moving the sheet stack confinement member to the loading position if the identification signal corresponds to the print medium identifier. Preferably a closure sensor is provided for sensing whether the tray is in its closed position. The confinement member actuator system is preferably controlled after or when the closure sensor determines that the tray is closed.

In another aspect the present invention further provides a sheet stack handling apparatus for use in the assembly according to the present invention, comprising:
- a sheet stack support for supporting a stack of print medium sheets;
- an access door through which access door when in an open position the sheet stack support of the sheet stack handling apparatus is accessible;
- an access door actuator for opening and closing the access door;
- a wireless signal receiver configured to receive the identification signal from the sheet stack transporting robot;
- a controller configured for:
- determining a print medium identifier for a print medium designated to the sheet stack support of the sheet stack handling apparatus;
- comparing the identification signal received by the wireless signal receiver to the print medium identifier; and
- controlling the access door actuator to open the access door if the identification signal corresponds to the print medium identifier.
The sheet stack handling apparatus may be configured as described above.

In a further aspect the present invention provides a robot for use in the assembly according to the present invention, comprising:
- a sheet stack support for supporting a stack of print medium sheets;
- a driving mechanism for moving the sheet stack transporting robot;
- a wireless signal emitter configured to emit an identification signal for the sheet stack transporting robot; and
- a wireless signal receiver for receiving command signals from a sheet stack handling apparatus according to the present invention.
The robot is configured to interact with the sheet stack handling apparatus in the above described manner.

A non-claimed embodiment further relates to a method for a fluid delivery of a sheet stack of print medium sheets between the sheet stack support of the sheet stack transporting robot according to the invention and the sheet stack support of the sheet stack handling apparatus according to the invention, the method comprising the steps of
a) determining a first moment in time and a first position for the sheet stack support of the sheet stack handling apparatus in order to deliver or to receive the sheet stack for at least one print job in the sheet stack,
b) determining a second moment in time and a second position for the sheet stack support of the sheet stack transporting robot in order to receive or to deliver the sheet stack,
c) matching the first moment in time with the second moment in time and the first position with the second position,
d) upon a match in step c), synchronizing a meeting between the sheet stack support of the sheet stack transporting robot and the sheet stack support of the sheet stack hanlding apparatus with respect to the first moment in time, the second moment in time, the first position and the second position, and
e) upon no match in step c),
   e1) defining a best possible synchronization with respect to the first moment in time, the second moment in time, the first position and the second position, given predetermined conditions for availability of the sheet stack support of the sheet stack transporting robot and for availability of the sheet stack support of the sheet stack handling apparatus, predetermined constraints for availability of the sheet stack support of the transporting robot and for availability of the sheet stack support of the sheet stack handling apparatus, predetermined capabilities of the sheet stack support of the sheet stack transporting robot and predetermined capabilities of the sheet stack support of the sheet stack handling apparatus, and
   e2) executing the fluid delivery according to the best possible synchronization defined in step e1).

The invention also relates to a method for a fluid delivery of a sheet stack of print medium sheets between the sheet stack support of the sheet stack transporting robot according to the present invention and the sheet stack support of the sheet stack handling apparatus according to the present invention, the method comprising the steps of
a) determining a first moment in time and a first position for the sheet stack support of the sheet stack handling apparatus in order to deliver or to receive the sheet stack for at least one print job in the sheet stack,
b) determining a current position for the sheet stack support of the sheet stack transporting robot,
c) determining a velocity and a path for the sheet stack transporting robot from the current position to the first position of the sheet stack support of the sheet stack handling apparatus, the velocity and path optimized to lead to an earliest moment in time approximately equal to or after the first moment in time for delivery or receipt of the sheet stack, and
d) the sheet stack transporting robot moving from the current position to the first position according to the optimized velocity and path, and
e) delivering or receiving the sheet stack at the first position.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given herein-below and the accompanying schematic drawings which are given by way of illustration only, and thus are not limitative of the present invention, and wherein:
Fig. 1 is a schematic side of a sheet printing system;
Fig. 2 is perspective schematic view of a sheet stack handling apparatus according to the present invention and a sheet stack transporting robot according to the present invention; and

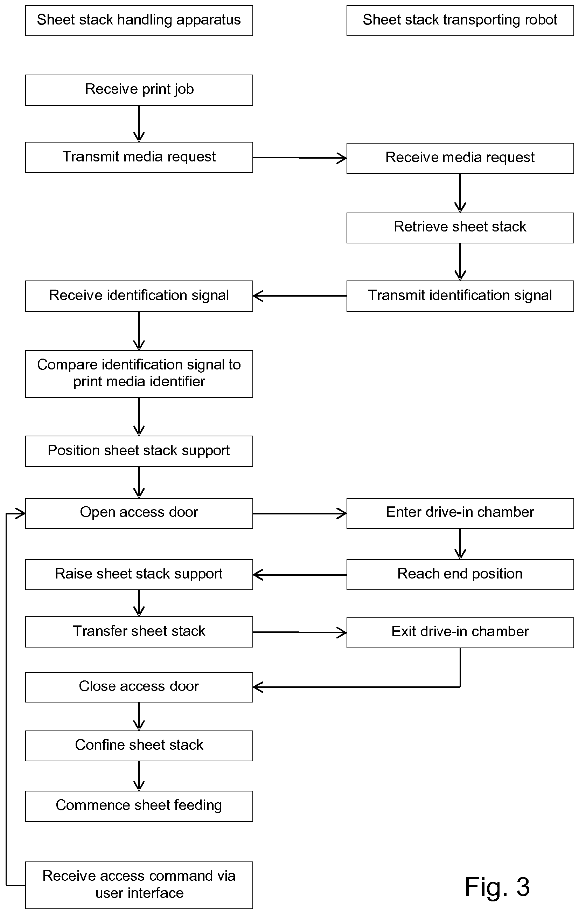

Fig. 3 is a block diagram illustrating the steps of the sheet transfer process according to the present invention.

### DETAILED DESCRIPTION OF THE DRAWINGS

The present invention will now be described with reference to the accompanying drawings, wherein the same reference numerals have been used to identify the same or similar elements throughout the several views.

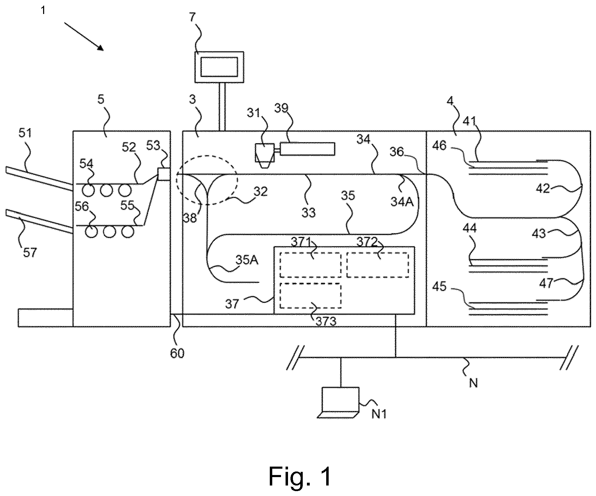

FIG. 1 shows schematically an embodiment of a printing system 1 according to the present invention. The printing system 1, for purposes of explanation, is divided into an output section 5, a print engine and control section 3, a local user interface 7 and an input section 4. While a specific printing system is shown and described, the disclosed embodiments may be used with other types of printing system such as an ink jet print system, an electrographic print system, etc.

The output section 5 comprises a first output holder 52 for holding printed image receiving material, for example a plurality of sheets. The output section 5 may comprise a second output holder 55. While 2 output holders are illustrated in FIG. 1, the number of output holders may include one, two, three or more output holders. The printed image receiving material is transported from the print engine and control section 3 via an inlet 53 to the output section 5. When a stack ejection command is invoked by the controller 37 for the first output holder 52, first guiding means 54 are activated in order to eject the plurality of sheets in the first output holder 52 outwards to a first external output holder 51. When a stack ejection command is invoked by the controller 37 for the second output holder 55, second guiding means 56 are activated in order to eject the plurality of sheets in the second output holder 55 outwards to a second external output holder 57.

The output section 5 is digitally connected by means of a cable 60 to the print engine and control section 3 for bi-directional data signal transfer.

The print engine and control section 3 comprises a print engine and a controller 37 for controlling the printing process and scheduling the plurality of sheets in a printing order before they are separated from input holder 44, 45, 46.
The controller 37 is a computer, a server or a workstation, connected to the print engine and connected to the digital environment of the printing system, for example a network N for transmitting a submitted print job to the printing system 1. In FIG. 1 the controller 37 is positioned inside the print engine and control section 3, but the controller 37 may also be at least partially positioned outside the print engine and control section 3 in connection with the network N in a workstation N1.
The controller 37 comprises a print job receiving section 371 permitting a user to submit a print job to the printing system 1, the print job comprising image data to be printed and a plurality of print job settings. The controller 37 comprises a print job queue section 372 comprising a print job queue for print jobs submitted to the printing system 1 and scheduled to be printed. The controller 37 comprises a sheet scheduling section 373 for determining for each of the plurality of sheets of the print jobs in the print job queue an entrance time in the paper path of the print engine and control section 3, especially an entrance time for the first pass and an entrance time for the second pass in the loop in the paper path according to the present invention. The sheet scheduling section 373 will also be called scheduler 373 hereinafter.
The sheet scheduling section 373 takes the length of the loop into account. The length of the loop corresponds to a loop time duration of a sheet going through the loop dependent on the velocity of the sheets in the loop. The loop time duration may vary per kind of sheet, i.e. a sheet with different media properties.

Resources may be recording material located in the input section 4, marking material located in a reservoir 39 near or in the print head or print assembly 31 of the print engine, or finishing material located near the print head or print assembly 31 of the print engine or located in the output section 5 (not shown).

The paper path comprises a plurality of paper path sections 32, 33, 34, 35 for transporting the image receiving material from an entry point 36 of the print engine and control section 3 along the print head or print assembly 31 to the inlet 53 of the output section 5. The paper path sections 32, 33, 34, 35 form a loop according to the present invention. The loop enables the printing of a duplex print job and/or a mix-plex job, i.e. a print job comprising a mix of sheets intended to be printed partially in a simplex mode and partially in a duplex mode.

The print head or print assembly 31 is suitable for ejecting and/or fixing marking material to image receiving material. The print head or print assembly 31 is positioned near the paper path section 34. The print head or print assembly 31 may be an inkjet print head, a direct imaging toner assembly or an indirect imaging toner assembly.

While an image receiving material is transported along the paper path section 34 in a first pass in the loop, the image receiving material receives the marking material through the print head or print assembly 31. A next paper path section 32 is a flip unit 32 for selecting a different subsequent paper path for simplex or duplex printing of the image receiving material. The flip unit 32 may be also used to flip a sheet of image receiving material after printing in simplex mode before the sheet leaves the print engine and control section 3 via a curved section 38 of the flip unit 32 and via the inlet 53 to the output section 5. The curved section 38 of the flip unit 32 may not be present and the turning of a simplex page has to be done via another paper path section 35.

In case of duplex printing on a sheet or when the curved section 38 is not present, the sheet is transported along the loop via paper path section 35A in order to turn the sheet for enabling printing on the other side of the sheet. The sheet is transported along the paper path section 35 until it reaches a merging point 34A at which sheets entering the paper path section 34 from the entry point 36 interweave with the sheets coming from the paper path section 35. The sheets entering the paper path section 34 from the entry point 36 are starting their first pass along the print head or print assembly 31 in the loop. The sheets coming from the paper path section 35 are starting their second pass along the print head or print assembly 31 in the loop. When a sheet has passed the print head or print assembly 31 for the second time in the second pass, the sheet is transported to the inlet 53 of the output section 5.

The input section 4 may comprise at least one input holder 44, 45, 46 for holding the image receiving material before transporting the sheets of image receiving material to the print engine and control section 3. Sheets of image receiving material are separated from the input holders 44, 45, 46 and guided from the input holders 44, 45, 46 by guiding means 42, 43, 47 to an outlet 36 for entrance in the print engine and control section 3. Each input holder 44, 45, 46 may be used for holding a different kind of image receiving material, i.e. sheets having different media properties. While 3 input holders are illustrated in FIG. 1, the number of input holders may include one, two, three or more input holders.

The local user interface 7 is suitable for displaying user interface windows for controlling the print job queue residing in the controller 37. In another embodiment a computer N1 in the network N has a user interface for displaying and controlling the print job queue of the printing system 1.

### Sheet stack handling apparatus

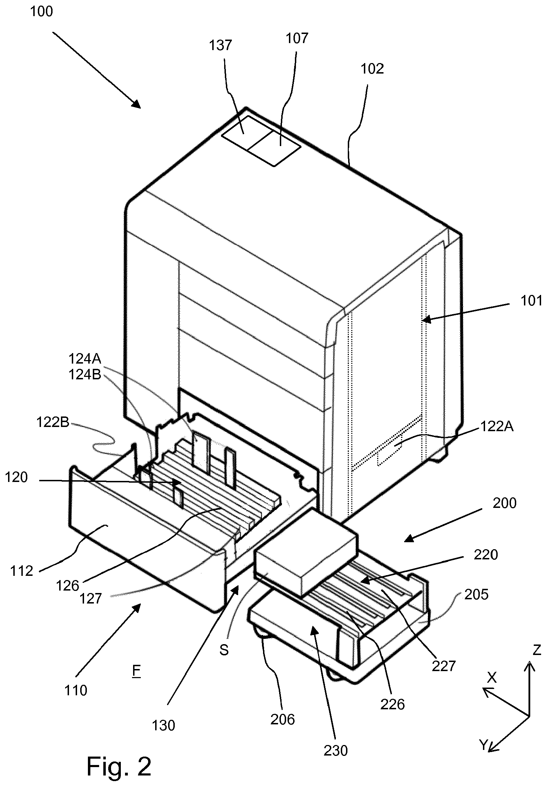

Fig. 2 shows an assembly of a sheet stack handling apparatus 100 according to the present invention and a sheet stack transporting robot 200 according to the present invention. The sheet stack handling apparatus 100 is illustrated as sheet input device 100. In a different embodiment, the sheet stack handling device 100 may be a sheet output device, such as the sheet stacker described in European Patent EP 1762523 B1, the description of which is herein incorporated by reference.

The sheet stack handling apparatus 100 comprise a frame 101 which during operation is supported on the floor F. A housing 102 is provided over the frame 101. The sheet stack handling apparatus 100 further comprises a plurality of trays 110, each of which is slideably mounted on the frame 101. A tray guide (not shown) is mounted on the frame 101 over which tray guide the tray 110 is slideable in a sliding direction Y. An access door actuator or tray actuator (not shown) is provided to move the tray 110 in the sliding direction Y between the open and closed positions. The tray 110 is illustrated in the open position. The tray 110 comprises a sheet stack support 120 configured to support at least one sheet stack S. On a front side of the tray 110 as seen in the sliding direction Y, an access door 112 in the form of a front panel 112 is mounted on the tray 110. In the closed position of the tray 110, the access door 112 closes the sheet stack chamber allowing for a controlled environment inside the sheet stack handling apparatus 100.

The sheet stack support 120 as shown in Fig. 2 is substantially rectangular and forms the bottom of the sheet stack chamber. A side of the tray 110 in the open position is accessible to the sheet stack transporting robot 200. This robot access side is around the corner from the access door 112 and extends along a lateral side of the tray 110 when viewed in the sliding direction Y. The inserting direction X wherein the sheet stack transporting robot 200 enters the access opening is substantially perpendicular to the sliding direction Y of the tray 110. The robot access side comprises an access opening, such that the sheet stack transporting robot 200 is able to position a sheet stack S over the sheet stack support 120. Thereto, a drive-in chamber 130 is formed below the sheet stack support 120. With the tray 110 in the open position the drive-in chamber 130 is sufficiently wide for the sheet stack transporting robot 200 to enter. The sheet stack support 120 is therein positioned at an appropriate height to allow the sheet stack transporting robot 200 to at least partially pass under it. Preferably a sheet stack support actuator (not shown) is provided for moving the sheet stack support 120 in the height direction Z. The controller 137 of the sheet stack handling apparatus 100 is preferably configured to control the sheet stack support actuator to position the sheet stack support 120 at a predetermined height position when the tray 110 is in the open position, such that the drive-in chamber 130 is sufficiently high to allow the sheet stack transporting robot 200 to enter it. In said predetermined height position a substantially empty sheet stack receiving volume is present above and over the sheet stack support 120 to receive the sheet stack S as the drive-in chamber 130 receives the robot body 205.

The top side of the tray 110 in the open position comprises a top access opening through which sheet stacks S can pass in the height direction Z. The tray 110 is accessible to an operator from above. The operator can thus manually transfer a sheet stack S to or from the tray 110 in a manner common to the operator. The access door actuator is configured to open and consecutively close the tray 110 when the controller 137 identifies that a sheet stack transporting robot 200 with a sheet stack S of a required print media type approaches the tray 110. For the operator a user interface 107 is provided through which the operator may input an open tray command, such that the access door actuator opens the tray 110.

Fig. 2 further shows the sheet stack confining assemblies 122, 124 for confining the sheet stack S in the width direction Y and the length direction X. In each direction X, Y sheet stack confining assemblies 122, 124 comprises sheet stack confinement members 122A, 122B, 124A, 124B each pair of which is positioned on opposite sides of the sheet stack S (or the respective sheet stack support area where the sheet stack S is to be positioned). At least one of said opposing sheet stack confinement members 122A, 122B, 124A, 124B is moveable in the respective direction X, Y to adjust its position in correspondence to the dimensions of the sheet stack S. In one example, a rear sheet stack confinement member 122B is positioned on a rear side of the sheet stack support 120 opposite to the robot access side. In the embodiment shown this rear sheet stack confinement member 122B is stationary with respect to the sheet stack support 120. The front sheet stack confinement member 122A is, when the tray 110 is closed, is positioned at the robot access side of the sheet stack support 120. The front sheet stack confinement member 122A is moveable in the length direction X which in Fig. 2 is parallel to the inserting direction X. A confinement member actuator system (not shown) is provided to move the front sheet stack confinement member 122A in the length direction X. During transfer the sheet stack transporting robot 200 may position the sheet stack S against the rear sheet stack confinement member 122B as it moves in the inserting direction X. After transfer the confinement member actuator system moves the front sheet stack confinement member 122A in the direction X against the sheet stack S. Preferably, the front sheet stack confinement member 122A is further moveable in the height direction Z to position it at the top of the sheet stack S. A similar confinement of the sheet stack S may be achieved in the width direction Y by means of the side sheet stack confinement members 124A, 124B. A sheet stack size sensor, such as a camera or one or more optical position sensors, may be provided to determine the position and/or dimensions of the sheet stack S on the sheet stack support 120.

The confinement member actuator system is further preferably configured to move the front sheet stack confinement member 122A in the height direction Z. Thereto a confinement member actuator is mounted on the frame 101 above the sheet stack support 120. The confinement member actuator is configured to move the front sheet stack confinement member 122A in the height direction Z with respect to the frame 101. The controller 137 is preferably further configured to move the front sheet stack confinement member 122A in the inserting direction X to a predetermined transfer position, wherein the sheet stack chamber is substantially free of the front sheet stack confinement member 122A to allow the sheet stack S to enter the frame 101. The sheet stack S can be moved with the sheet stack support 120 in the inserting direction X without contacting the front sheet stack confinement member 122A.

The sheet stack support 120 comprises a plurality of parallel support surface segments 126. The surface segments 126 are longitudinally shaped in the inserting direction X.

The support surface segments 126 are separated from one another in the width direction Y by spacings 127. The support surface segments 126 may be formed by longitudinal fingers or the upper surfaces of a sinusoidal plate. The support surface segments 126 are configured to support the sheet stack S while the spacings 127 provide room for the support surface segments 226 of the sheet stack transporting robot 200 to pass in between the support surface segments 126.

To transfer the sheet stack S onto the opened tray 110, the controller 137 controls a sheet stack support actuator to move the sheet stack 120 to a robot access position. In said robot access position the drive-in chamber 130 is formed below the sheet stack support 120. As the sheet stack transporting robot 200 enters the drive-in chamber 130, the sheet stack S moves over and above the sheet stack support 120. The front sheet stack confinement member 122A is positioned within the frame 101 so as not to obstruct the sheet stack S. When the sheet stack S is positioned, the controller 137 controls the sheet stack support actuator to raise the stack sheet support 120. The support surface segments 126 then move upwards through the support surface segments 226 of the sheet stack transporting robot 200. As such the sheet stack S is transferred to the sheet stack support 120. After transfer, the controller 137 may control the confinement member actuator system to position the sheet stack confinement members 122A, 122B, 124A, 124B against the sheet stack S. It will be appreciated that in an embodiment, the sheet stack support 220 of the sheet stack transporting robot 200 may be provided with a suitable actuator to be height adjustable for transferring the sheet stack S.

### Sheet stack transporting robot

Fig. 2 further illustrates the sheet stack transporting robot 200. The robot body 205 is supported on a transport mechanism 206 in the form of a plurality of wheels 206 and a motor housed inside the robot body 205. This transport mechanism 206 allows the sheet stack transporting robot 200 to move across the floor F to and from the sheet stack handling apparatus 100. The sheet stack support 220 of the sheet stack transporting robot 200 is formed by a plurality of spaced apart fingers 226. The fingers 226 extend in the length direction X of the sheet stack transporting robot 200. The fingers 226 are separated by empty spacings 227. The sheet stack support 220 is supported over the robot body 205, such that a receiving space 230 is formed between the robot body 200 and the sheet stack support 220. The receiving space 230 is dimensioned to receive the sheet stack support 120 of the sheet stack handling apparatus 100 as the robot body 205 enters the drive-in chamber 130. The sheet stack support 220 is thereto supported on only one side of the robot body 205, which side faces away from the tray 110 as the robot body 205 enters the drive-in chamber 130. When viewed from the side (the Y-direction in Fig. 2) the receiving space 230 is substantially U-shaped.

### Sheet transfer operation

A print job is received by the controller 37 of the printing system 1. The controller 37 transmits print job information to the controller 137 of the sheet stack handling apparatus 100. Said print job information comprises information determining a medium type and an amount of said medium type, here after referred to as print media identifier. The print job information may further comprises scheduling information regarding the planned time period wherein the corresponding print job is to be printed on said media type.

A media request is then transmitted to a sheet stack transporting robot 200. The media request preferably comprises the print media identifier. The media request may be transmitted via a wireless transmitter on the printing system 1, the sheet stack handling apparatus 100, or via a central processor overseeing multiple printing systems 1. The sheet stack transporting robot 200 comprises a wireless receiver for receiving the media request. Upon receipt of the media request, the sheet stack transporting robot 200 moves to a media supply to retrieve the requested amount of the designated media type. The sheet stack transporting robot 200 further comprises a memory which stores an identification signal which can be used to distinguish one sheet stack transporting robot 200 from another. In another embodiment, the identification signal is corresponding to the media type designated in the media request and thus to the media type loaded onto the sheet stack transporting robot 200.

The sheet stack transporting robot 200 moves with the loaded sheet stack S towards the sheet stack handling apparatus 100 so as to arrive there preferably before the planned execution of the scheduled print job.

The sheet stack transporting robot 200 comprises a wireless transmitter which then emits the identification signal to the receiver of the sheet stack handling apparatus 100. The controller 137 of the sheet stack handling apparatus 100 compares the identification signal to the print medium identifier as prescribed by the print job. In one example, the identification signal comprises media type and amount information, which allows for direct comparison to the print media identifier as determined by the print job. Alternatively, the controller 137 transmits the identification signal to a central processor, which comprises a look-up table wherein each sheet stack handling robot 200 is linked to the media type and amount currently loaded onto it. When using a central processor all communication between the sheet stack handling apparatus 100 and sheet stack transporting robot 200 may proceed via the central processor for centralized control system.

When the print media identifier corresponds or matches the identification signal, the controller 137 opens the tray 110 for access by the sheet stack transporting robot 200. The sheet stack support 120 is positioned in its robot entry position, thereby forming the drive-in chamber 130 and positioning the sheet stack support 120 at a height wherein it is receivable by the receiving space 230. The access door actuator is controlled to open the access 112 by sliding the tray 110 in the Y direction. Thereby an access opening is formed on a side of the tray 110 perpendicular to the access door 112. Said access opening is accessible in the X direction. Via the access opening the sheet stack transporting robot 200 is able to enter the drive-chamber 130 and the sheet stack chamber above the sheet stack support 120.

After confirmation of the opening of the tray 110, the robot body 205 of the sheet stack transporting robot 200 enters the drive-in chamber 130, thereby positioning the sheet stack support 220 with the sheet stack S on it over the sheet stack support 120. During entry the robot body 205 is preferably positioned in a predetermined position, for example by means of a guide which tapers or narrows in the X direction in combination with an end stop at the end of said guide. In this position the fingers 226 do not overlap with the surface segments 126 when viewed in the height direction Z. The sheet stack confinement members 124A, 124B prior to insertion have been moved by the confinement member actuator system to a position outside of the path of the sheet stack S.

When the robot body 205 has reached its predetermined end position, the sheet stack support 120 is raised, thereby passing the surface segments 126 through the spacings 227. The sheet stack S is thereby transferred to the sheet stack support 120. The robot body 205 is then controlled to move out of the drive-chamber 130, after which the tray 110 is controlled to be closed. Before closing the tray 110, the front sheet stack confinement member 122A is moved in the X direction outside of the path of sheet stack S during the closing movement of the tray 110.

To properly secure the sheet stack S on the sheet stack support 120, the one or both sheet stack confinement members 124A, 124B are moved in the Y direction against the sheet stack S. Similarly, after the tray 110 has been closed the front sheet stack confinement member 122A which is confined in the housing 101 is moved in the X direction against the sheet stack S. The sheet stack confinement member 122A is further moveable in the height direction Z to properly position it against the top of the sheet stack S. The top or height of the sheet stack S is therein preferably determined by an optical sheet stack size sensor, such as a light based distance sensor.

Additionally, the operator is able to input a command via the user interface 107 to open tray 110. Since the tray 110 is open from the top the operator may load sheet stacks S as customary. The sheet stack handling apparatus 100 is thus suited for both manual loading and robot loading.

### Scheduling

According to an embodiment, in order to achieve a fluid delivery of a sheet stack S of print medium sheets between the sheet stack support 230 of the sheet stack transporting robot 200 according to the invention and the sheet stack support 120 of the sheet stack handling apparatus 100 according to the invention, a first moment in time and a first position for the sheet stack support 120 of the sheet stack handling apparatus 100 in order to deliver or to receive the sheet stack S for at least one print job in the sheet stack S is determined. The controller 137 is configured to schedule print jobs in print job queue for printing between a print job start time and a print job end time.
In a first case the sheet stack is received by the sheet stack support 230 of the sheet stack transporting robot 200 from the sheet stack support 120 of the sheet stack handling apparatus 100. The first moment in time that the print jobs are ready is known beforehand and also the first position for the sheet stack support 120, i.e. the scheduled output tray, is determined. The controller 137 is also configured to receive via the wireless signal receiver a second position for the sheet stack support 230 of the sheet stack transporting robot 200. From the second position the controller 137 is able to derive a second moment in time, or even a time range, when the sheet stack support 230 of the sheet stack transporting robot 200 meets the sheet stack support 120 of the sheet stack handling apparatus 100 in order to receive the sheet stack S.
In a second case the sheet stack is delivered by the sheet stack support 230 of the sheet stack transporting robot 200 towards the sheet stack support 120 of the sheet stack handling apparatus 100. The first moment in time that the media for the print jobs are needed for printing is known beforehand and also the first position for the sheet stack support 120 which is going to receive the media of the sheet stack S, i.e. the scheduled input tray, is determined. The controller 137 is also configured to receive via the wireless signal receiver a second position for the sheet stack support 230 of the sheet stack transporting robot 200. From the second position a second moment in time the controller 137 is able to derive a second moment in time, or even a time range, when the sheet stack support 230 of the sheet stack transporting robot 200 meets the sheet stack support 120 of the sheet stack handling apparatus 100 in order to deliver the sheet stack S.
The controller 137 is configured to match the first moment in time with the second moment in time and the first position with the second position.
Upon a match, a meeting between the sheet stack support 230 of the sheet stack transporting robot 200 and the sheet stack support 120 of the sheet stack hanlding apparatus 100 is synchronized with respect to the first moment in time, the second moment in time, the first position and the second position.
Upon no match, a best possible synchronization is defined with respect to the first moment in time, the second moment in time, the first position and the second position, given predetermined conditions for availability of the sheet stack support 230 of the sheet stack transporting robot 200 and for availability of the sheet stack support 120 of the sheet stack handling apparatus 100, predetermined constraints for availability of the sheet stack support 230 of the transporting robot 200 and for availability of the sheet stack support 120 of the sheet stack handling apparatus 100, predetermined capabilities of the sheet stack support 230 of the sheet stack transporting robot 200 and predetermined capabilities of the sheet stack support 120 of the sheet stack handling apparatus 100. A fluid delivery is then executed according to the best possible synchronization.

According to an embodiment a current position for the sheet stack support 230 of the sheet stack transporting robot is determined. The controller is configured to determine a velocity and a path for the sheet stack transporting robot 200 from the determined current position to the first position of the sheet stack support 120 of the sheet stack handling apparatus 100. The velocity and path may be optimized to lead to an earliest moment in time approximately equal to or after the first moment in time for delivery or receipt of the sheet stack S, i.e. a moment in time near the first moment in time. A starting time of moving the sheet stack transporting robot 200 is determined. At this starting time the sheet stack transporting robot is moving from the current position to the first position according to the optimized velocity and path and the sheet stack S is delivered or received at the first position.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.
Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, such a reference to a structural element encompasses a computer readable medium carrying such computer executable instructions.
Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.
The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An assembly of a sheet stack handling apparatus (100) and a sheet stack transporting robot (200), wherein the sheet stack transporting robot (200) comprises:
- a sheet stack support (220) for supporting a sheet stack (S) of print medium sheets;
- a driving mechanism (206) for moving the sheet stack transporting robot (200);
- a wireless signal emitter configured to emit an identification signal for the sheet stack transporting robot (200),
wherein the sheet stack handling apparatus (100) comprises:
- a sheet stack support (120) for supporting a sheet stack (S) of print medium sheets;
- an access door (112) through which access door (112) when in an open position the sheet stack support (120) of the sheet stack handling apparatus (100) is accessible;
- an access door actuator for opening and closing the access door (112);
- a wireless signal receiver configured to receive the identification signal from the sheet stack transporting robot (200);
- a controller (137) configured for:
- determining a print medium identifier for a print medium designated to the sheet stack support (120) of the sheet stack handling apparatus (100);
- comparing the identification signal received by the wireless signal receiver to the print medium identifier; and
- controlling the access door actuator to open the access door (112) if the identification signal corresponds to the print medium identifier.

2. The assembly according to claim 1, wherein each sheet stack support (120, 220) comprises a plurality of substantially parallel, longitudinal surface segments (136, 236) spaced apart from one another.

3. The assembly according to claim 2, wherein at least one of the sheet stack supports (120, 220) comprises a plurality of parallel longitudinal support fingers (136, 236) spaced apart from one another in a width direction (Y) perpendicular to a longitudinal direction (X) of the support fingers (136, 236).

4. The assembly according to claim 3, wherein the support fingers (136, 236) of the at least one of the sheet stack supports (120, 220) are positioned and dimensioned to fit in between the surface segments (136, 236) of the other of the sheet stack supports (120, 220), when viewed in the height direction (Z).

5. The assembly according to any of the previous claims, wherein the sheet stack handling apparatus (100) further comprises:
- a sheet stack confinement member (122A) extending in a sheet stacking direction (Z) perpendicular to a plane of the sheet stack support (120) of the sheet stack handling apparatus (100), which sheet stack confinement member (122A) is positioned within a frame (101) or housing (102) of the sheet stack handling apparatus (100) when the access door (112) is in the open position; and
- a confinement member actuator system for moving the sheet stack confinement member (122A) to a confining position wherein the sheet stack confinement member (122A) is positioned to at least partially contact a side of a top sheet of the sheet stack (S) on the sheet stack support (120) of the sheet stack handling apparatus (100).

6. The assembly according to claim 5, wherein the sheet stack support (120) of the sheet stack handling apparatus (100) comprises a robot access side via which robot access side a sheet stack (S) is transferrable between the sheet stack support (220) of the sheet stack transporting robot (200) and the sheet stack supports (120) of the sheet stack handling apparatus (100), wherein the sheet stack confinement member (122A) is positioned at the robot access side of the sheet stack support (120) of the sheet stack handling apparatus (100) when the access door (112) is in its closed position.

7. The assembly according to claim 5 or 6, wherein the sheet stack handling apparatus (100) further comprises a sheet separation suction device mounted on a frame (101) over the sheet stack support (120) of the sheet stack handling apparatus (100) when the access door (112) is in its closed position for lifting a top sheet from a sheet stack (S) on said sheet stack support (120), and wherein the confinement member actuator system is further mounted on said frame (101) above the sheet stack support (120) of the sheet stack handling apparatus (100) adjacent the sheet separation suction device when the access door (112) is in its closed position.

8. The assembly according to claim 5, 6, or 7, wherein the sheet stack handling apparatus (100) further comprises:
- a sheet stack size sensor configured to determine a size of a sheet stack (S) on the sheet stack support (120) of the sheet stack handling apparatus (100), wherein the controller is configured to control the confinement member actuator system to move the sheet stack confinement member (122A) at least partially against a side of the sheet stack (S).

9. The assembly according to any of the claims 5 to 8, further comprising a further sheet stack confinement member (124A, 124B) movable by a further confinement member actuator system to confine the sheet stack (S) in a direction (Y) substantially perpendicular to a confining direction (X) of the sheet stack confinement member (122A).

10. The assembly according to any of the previous claims, wherein the sheet stack handling apparatus (100) further comprises a tray (110) slideably mounted on a frame (101) of the sheet stack handling apparatus (100), wherein the tray (110) holds the sheet stack support (120) of the sheet stack handling apparatus (100), and wherein the access door (112) forms a front panel (112) of the tray (110) with respect to a sliding direction (Y) of the tray (110).

11. The assembly according to claim 10, wherein the tray (110) comprises a drive-in chamber (130) which in the open position is accessible for the sheet stack transporting robot (200) in an inserting direction (X) perpendicular to the sliding direction (Y).

12. The assembly according to any of the previous claims, wherein the sheet stack handling apparatus (100) further comprises a sheet stack support actuator for moving the sheet stack support (120) of the sheet stack handling apparatus (100) in a height direction (Z) perpendicular to a plane of said sheet stack support (120), and wherein the controller (137) is configured to raise the sheet stack support (120) of the sheet stack handling apparatus (100) in the height direction (Z) from a predetermined robot access position to transfer a sheet stack (S) from the sheet stack support (220) of the sheet stack transport robot (200) to the sheet stack support (120) of the sheet stack handling apparatus (100).

13. A sheet stack handling apparatus (100) for use in the assembly according to any of the claims 1 to 12, comprising:
- a sheet stack support (120) for supporting a sheet stack (S) of print medium sheets;
- an access door (122) through which access door (122) when in an open position the sheet stack support (120) is accessible;
- an access door actuator for opening and closing the access door (112);
- a wireless signal receiver configured to receive the identification signal from a sheet stack transporting robot (200);
- a controller (137) configured for:
- determining a print medium identifier for a print medium designated to the sheet stack support (120);
- comparing the identification signal received by the wireless signal receiver to the print medium identifier; and
- controlling the access door actuator to open the access door (112) if the identification signal corresponds to the print medium identifier.

14. A sheet stack transporting robot (200) for use in the assembly according to any of the claims 1 to 12, comprising:
- a sheet stack support (220) for supporting a sheet stack (S) of print medium sheets;
- a driving mechanism (206) for moving the sheet stack transporting robot (200);
- a wireless signal emitter configured to emit an identification signal for the sheet stack transporting robot (200); and
- a wireless signal receiver for receiving command signals from a sheet stack handling apparatus (100) according to claim 13.

15. A method for a fluid delivery of a sheet stack (S) of print medium sheets between the sheet stack support (220) of the sheet stack transporting robot (200) according to claim 1 and the sheet stack support (120) of the sheet stack handling apparatus (100) according to claim 1, the method comprising the steps of
a) determining a first moment in time and a first position for the sheet stack support (120) of the sheet stack handling apparatus (100) in order to deliver or to receive the sheet stack (S) for at least one print job in the sheet stack (S),
b) determining a current position for the sheet stack support (220) of the sheet stack transporting robot (200),
c) determining a velocity and a path for the sheet stack transporting robot (200) from the current position to the first position of the sheet stack support (120) of the sheet stack handling apparatus (100), the velocity and path optimized to lead to an earliest moment in time approximately equal to or after the first moment in time for delivery or receipt of the sheet stack (S), and
d) the sheet stack transporting robot (200) moving from the current position to the first position according to the optimized velocity and path, and
e) delivering or receiving the sheet stack (S) at the first position.

## Patentansprüche

1. Baugruppe mit einer Bogenstapelhandhabungsvorrichtung (100) und einem Transportroboter (200) für Bogenstapel, wobei der Transportroboter (100) aufweist:
- einen Bogenstapelträger (220) zur Aufnahme eines Bogenstapels (S) von Bögen eines Druckmediums;
- einen Antriebsmechanismus (206) zum Bewegen des Transportroboters (200);
- einen drahtlosen Signalemitter, der dazu konfiguriert ist, ein Identifizierungssignal für den Transportroboter (200) auszusenden,
wobei die Bogenstapelhandhabungsvorrichtung (100) aufweist:
- einen Bogenstapelträger (120) zur Aufnahme eines Bogenstapels (S) von Bögen eines Druckmediums;
- eine Zugangstür (112), durch welche, wenn sie sich in einer geöffneten Stellung befindet, der Bogenstapelträger (120) der Bogenstapelhandhabungsvorrichtung (100) zugänglich ist;
- einen Zugangstürbetätiger zum Öffnen und Schließen der Zugangstür (112);
- einen drahtlosen Signalempfänger, der dazu konfiguriert ist, das Identifizierungssignal von dem Transportroboter (200) für Bogenstapel zu empfangen;
- eine Steuereinrichtung (137), die dazu konfiguriert ist;
- eine Druckmedienkennung für ein Druckmedium zu bestimmen, das dem Bogenstapelträger (120) der Bogenstapelhandhabungsvorrichtung (100) zugewiesen ist;
- das von dem drahtlosen Signalempfänger empfangene Identifizierungssignal mit der Druckmedienkennung zu vergleichen; und
- den Zugangstürbetätiger dazu anzusteuern, die Zugangstür (112) zu öffnen, wenn das Identifizierungssignal der Druckmedienkennung entspricht.

2. Baugruppe nach Anspruch 1, bei der jeder Bogenstapelträger (120, 220) eine Vielzahl von im wesentlichen parallelen länglichen Oberflächensegmenten (136, 236) aufweist, die in Abstand zueinander angeordnet sind.

3. Baugruppe nach Anspruch 2, bei der wenigstens einer der Bogenstapelträger (120, 220) eine Vielzahl von parallelen länglichen Tragfingern (136, 236) aufweist, die in einer Breitenrichtung (Y) rechtwinklig zu einer Längsrichtung (X) der Tragfinger (136, 236) in Abstand zueinander angeordnet sind.

4. Baugruppe nach Anspruch 3, bei der die Tragfinger (136, 236) des wenigstens einen der Bogenstapelträger (120, 220) so positioniert und dimensioniert sind, dass sie in der Höhenrichtung (Z) gesehen zwischen die Oberflächensegmente (136, 236) des anderen der Bogenstapelträger (120, 220) passen.

5. Baugruppe nach einem der vorstehenden Ansprüche, bei der die Bogenstapelhandhabungsvorrichtung (100) weiterhin aufweist:
- ein Begrenzungselement (122A) für Bogenstapel, das sich in einer Bogenstapelrichtung (Z) rechtwinklig zu einer Ebene des Bogenstapelträgers (120) der Bogenstapelhandhabungsvorrichtung (100) erstreckt, wobei das Begrenzungselement (122A) in einem Rahmen (101) oder Gehäuse (102) der Bogenstapelhandhabungsvorrichtung (100) positioniert ist, wenn sich die Zugangstür (112) in der geöffneten Stellung befindet; und
- ein Betätigungssystem für das Begrenzungselement, zum Bewegen des Begrenzungselements (122A) in eine begrenzende Position, in der das Begrenzungselement (122A) so positioniert ist, dass es eine Seite eines obersten Bogens des Bogenstapels (S) auf dem Bogenstapelträger (120) der Bogenstapelhandhabungsvorrichtung (100) wenigstens zum Teil berührt.

6. Baugruppe nach Anspruch 5, bei der der Bogenstapelträger (120) der Bogenstapelhandhabungsvorrichtung (100) eine Zugangsseite für Roboter aufweist, über welche Zugangsseite ein Bogenstapel (S) zwischen dem Bogenstapelträger (120) des Transportroboters (200) und den Bogenstapelträgern (120) der Bogenstapelhandhabungsvorrichtung (100) überführbar ist, wobei das Begrenzungselement (122A) für Bogenstapel auf der Zugangsseite für Roboter des Bogenstapelträgers (120) der Bogenstapelhandhabungsvorrichtung (100) positioniert ist, wenn sich die Zugangstür (112) in der geschlossenen Stellung befindet.

7. Baugruppe nach Anspruch 5 oder 6, bei der die Bogenstapelhandhabungsvorrichtung (100) weiterhin eine Saugvorrichtung zum Trennen von Bögen aufweist, welche Saugvorrichtung auf einem Rahmen (101) über dem Bogenstapelträger (120) der Bogenstapelhandhabungsvorrichtung (100) montiert ist, wenn sich die Zugangstür (112) in ihrer geschlossenen Stellung befindet, um einen obersten Bogen von einem Bogenstapel (S) auf dem Bogenstapelträger (120) anzuheben, und wobei das Betätigungssystem für das Begrenzungselement außerdem oberhalb des Bogenstapelträgers (120) der Bogenstapelhandhabungsvorrichtung (100) benachbart zu der Saugvorrichtung zum Trennen von Bögen an dem genannten Rahmen (101) montiert ist, wenn sich die Zugangstür (112) in ihrer geschlossenen Stellung befindet.

8. Baugruppe nach Anspruch 5, 6 oder 7, bei der die Bogenstapelhandhabungsvorrichtung (100) weiterhin aufweist:
- einen Stapelgrößensensor, der dazu konfiguriert ist, eine Größe eines Bogenstapels (S) auf dem Bogenstapelträger (120) der Bogenstapelhandhabungsvorrichtung (100) zu bestimmen, wobei die Steuereinrichtung dazu konfiguriert ist, das Betätigungssystem für das Begrenzungselement zu steuern, um das Begrenzungselement (122A) für Bogenstapel zumindest zum Teil gegen eine Seite des Bogenstapels (S) zu bewegen.

9. Baugruppe nach einem der Ansprüche 5 bis 8, weiterhin aufweisend ein weiteres Begrenzungselement (124A, 124B) für Bogenstapel, welches weitere Begrenzungselement durch ein weiteres Betätigungssystem für Begrenzungselemente bewegbar ist, um den Bogenstapel (S) in einer Richtung (Y) im wesentlichen rechtwinklig zu einer Begrenzungsrichtung (X) des Begrenzungselements (122) für Bogenstapel zu begrenzen.

10. Baugruppe nach einem der vorstehenden Ansprüche, bei der die Bogenstapelhandhabungsvorrichtung (100) weiterhin ein Tablar (110) aufweist, das verschiebbar an einem Rahmen (101) der Bogenstapelhandhabungsvorrichtung (100) montiert ist, wobei das Tablar (110) den Bogenstapelträger (120) der Bogenstapelhandhabungsvorrichtung (100) hält und wobei die Zugangstür (112) eine vordere Wand (112) des Tablars (110) in Bezug auf eine Verschieberichtung (Y) des Tablars (110) bildet.

11. Baugruppe nach Anspruch 10, bei der das Tablar (110) eine Einfahrkammer (130) aufweist, die in der geöffneten Position für den Transportroboter (200) für Bogenstapel in einer Einfahrrichtung (X) rechtwinklig zu der Verschieberichtung (Y) zugänglich ist.

12. Baugruppe nach einem der vorstehenden Ansprüche, bei der die Bogenstapelhandhabungsvorrichtung (100) weiterhin einen Aktuator für den Bogenstapelträger aufweist, zum Bewegen des Bogenstapelträgers (120) der Bogenstapelhandhabungsvorrichtung (100) in einer Höhenrichtung (Z) rechtwinklig zu einer Ebene des Bogenstapelträgers (120), und wobei die Steuereinrichtung (137) dazu konfiguriert ist, den Bogenstapelträger (120) der Bogenstapelhandhabungsvorrichtung (100) in der Höhenrichtung (Z) aus einer vorbestimmten Zugangsposition für den Roboter anzuheben, um einen Bogenstapel (S) von dem Bogenstapelträger (220) des Transportroboters (200) für Bogenstapel auf den Bogenstapelträger (120) der Bogenstapelhandhabungsvorrichtung (100) zu überführen.

13. Bogenstapelhandhabungsvorrichtung (100) zum Gebrauch in der Baugruppe nach einem der Ansprüche 1 bis 12, mit:
- einem Bogenstapelträger (120) zur Aufnahme eines Bogenstapels (S) von Bögen eines Druckmediums; einer Zugangstür (122), durch welche Zugangstür (122), wenn sie sich in einer geöffneten Stellung befindet, der Bogenstapelträger (120) zugänglich ist;
- einen Betätiger für die Zugangstür, zum Öffnen und Schließen der Zugangstür (112);
- einen drahtlosen Signalempfänger, der dazu konfiguriert ist, das Identifizierungssignal von einem Transportroboter (200) für Bogenstapel zu empfangen;
- eine Steuereinrichtung (137), die dazu konfiguriert ist:
- eine Druckmedienkennung für ein Druckmedium zu bestimmen, das dem Bogenstapelträger (120) zugewiesen ist;
- das von dem drahtlosen Signalempfänger empfangene Identifizierungssignal mit der Druckmedienkennung zu vergleichen; und
- den Betätiger für die Zugangstür zu steuern, um die Zugangstür (112) zu öffnen, wenn das Identifizierungssignal der Medienkennung entspricht.

14. Transportroboter (200) für Bogenstapel, zum Gebrauch in einer Baugruppe nach einem der Ansprüche 1 bis 12, mit:
- einem Bogenstapelträger (220) zur Aufnahme eines Bogenstapels (S) von Bögen eines Druckmediums;
- einem Antriebsmechanismus (102) zum Bewegen des Transportroboters (200) für Bogenstapel;
- einem drahtlosen Signalemitter, der dazu konfiguriert ist, ein Identifizierungssignal für den Transportroboter (200) für Bogenstapel zu emittieren; und
- einem drahtlosen Empfänger zum Empfang von Befehlssignalen von einer Bogenstapelhandhabungsvorrichtung (100) gemäß Anspruch 13.

15. Verfahren für eine liquide Übergabe eines Bogenstapels (S) von Bögen eines Druckmediums zwischen dem Bogenstapelträger (220) des Transportroboters gemäß Anspruch 1 und dem Bogenstapelträger (120) der Bogenstapelhandhabungsvorrichtung (100) gemäß Anspruch 1, welches Verfahren die folgenden Schritte aufweist:
a) bestimmen eines ersten Zeitpunkts und einer ersten Position für den Bogenstapelträger (120) der Bogenstapelhandhabungsvorrichtung (100), um den Bogenstapel (S) für wenigstens einen Druckauftrag in dem Bogenstapel (S) auszuliefern oder zu empfangen,
b) bestimmen einer aktuellen Position für den Bogenstapelträger (220) des Transportroboters (200) für Bogenstapel,
c) bestimmen einer Geschwindigkeit und eines Weges für den Transportroboter (200) für Bogenstapel von der aktuellen Position zu der ersten Position des Bogenstapelträgers (120) der Bogenstapelhandhabungsvorrichtung (100), wobei die Geschwindigkeit und der Weg optimiert sind, um zu einem frühesten Zeitpunkt zu führen, der annähernd gleich dem ersten Zeitpunkt für die Auslieferung oder den Empfang des Bogenstapels (S) oder später als dieser Zeitpunkt liegt, und
d) Bewegung des Transportroboters (200) für Bogenstapel aus der aktuellen Position zu der ersten Position gemäß der optimierten Geschwindigkeit und des optimierten Weges, und
e) ausliefern oder empfangen des Bogenstapels (S) in der ersten Position.

## Revendications

1. Ensemble d'un appareil de manipulation de pile de feuilles (100) et d'un robot de transport de pile de feuilles (200), dans lequel le robot de transport de pile de feuilles (200) comprend :
- un support de pile de feuilles (220) destiné à supporter une pile de feuilles (S) de feuilles de support d'impression ;
- un mécanisme d'entraînement (206) pour déplacer le robot de transport de pile de feuilles (200) ;
- un émetteur de signaux sans fil conçu pour émettre un signal d'identification pour le robot de transport de pile de feuilles (200) ;
dans lequel l'appareil de manipulation de pile de feuilles (100) comprend :
- un support de pile de feuilles (120) destiné à supporter une pile de feuilles (S) de feuilles de support d'impression ;
- une porte d'accès (112) à travers laquelle porte d'accès (112) lorsqu'elle est dans une position ouverte, le support de pile de feuilles (120) de l'appareil de manipulation de pile de feuilles (100) est accessible ;
- un actionneur de porte d'accès destiné à ouvrir et fermer la porte d'accès (112) ;
- un récepteur de signaux sans fil conçu pour recevoir le signal d'identification provenant du robot de transport de pile de feuilles (200) ;
- un dispositif de commande (137) conçu pour :
- déterminer un identifiant de support d'impression pour un support d'impression destiné au support de pile de feuilles (120) de l'appareil de manipulation de pile de feuilles (100) ;
- comparer le signal d'identification reçu par le récepteur de signaux sans fil à l'identifiant de support d'impression ; et
- commander l'actionneur de porte d'accès pour ouvrir la porte d'accès (112) si le signal d'identification correspond à l'identifiant de support d'impression.

2. Ensemble selon la revendication 1, dans lequel chaque support de pile de feuilles (120, 220) comprend une pluralité de segments de surface longitudinaux sensiblement parallèles (136, 236) espacés les uns des autres.

3. Ensemble selon la revendication 2, dans lequel au moins un des supports de pile de feuilles (120, 220) comprend une pluralité de doigts de support longitudinaux parallèles (136, 236) espacés les uns des autres dans une direction de la largeur (Y) perpendiculaire à une direction longitudinale (X) des doigts de support (136, 236).

4. Ensemble selon la revendication 3, dans laquelle les doigts de support (136, 236) de l'au moins un des supports de pile de feuilles (120, 220) sont positionnés et dimensionnés pour s'adapter entre les segments de surface (136, 236) de l'autre des supports de pile de feuilles (120, 220), lorsqu'on regarde dans la direction de la hauteur (Z).

5. Ensemble selon l'une quelconque des revendications précédentes, dans lequel l'appareil de manipulation de pile de feuilles (100) comprend en outre :
- un élément de confinement de pile de feuilles (122A) s'étendant dans une direction d'empilement de feuilles (Z) perpendiculaire à un plan du support de pile de feuilles (120) de l'appareil de manipulation de pile de feuilles (100), lequel élément de confinement de pile de feuilles (122A) est positionné à l'intérieur d'un châssis (101) ou d'un logement (102) de l'appareil de manipulation de pile de feuilles (100) lorsque la porte d'accès (112) est dans la position ouverte ; et
- un système d'actionnement d'élément de confinement destiné à déplacer l'élément de confinement de pile de feuilles (122A) vers une position de confinement dans laquelle l'élément de confinement de pile de feuilles (122A) est positionné pour entrer au moins partiellement en contact avec un côté d'une feuille supérieure de la pile de feuilles (S) sur le support de pile de feuilles (120) de l'appareil de manipulation de pile de feuilles (100).

6. Ensemble selon la revendication 5, dans lequel le support de pile de feuilles (120) de l'appareil de manipulation de pile de feuilles (100) comprend un côté d'accès robot via lequel côté d'accès robot une pile de feuilles (S) est transférable entre le support de pile de feuilles (220) du robot de transport de pile de feuilles (200) et le support de pile de feuilles (120) de l'appareil de manipulation de pile de feuilles (100), dans lequel l'élément de confinement de pile de feuilles (122A) est positionné au niveau d'un côté d'accès robot du support de pile de feuilles (120) de l'appareil de manipulation de pile de feuilles (100) lorsque la porte d'accès (112) est dans sa position fermée.

7. Ensemble selon la revendication 5 ou 6, dans lequel l'appareil de manipulation de pile de feuilles (100) comprend en outre un dispositif d'aspiration de séparation de feuilles monté sur un châssis (101) par-dessus le support de pile de feuilles (120) de l'appareil de manipulation de pile de feuilles (100) lorsque la porte d'accès (112) est dans sa position fermée pour soulever une feuille supérieure depuis une pile de feuilles (S) sur ledit support de pile de feuilles (120), et dans lequel le système d'actionnement d'élément de confinement est en outre monté sur ledit châssis (101) au-dessus du support de pile de feuilles (120) de l'appareil de manipulation de pile de feuilles (100) de manière adjacente au dispositif d'aspiration de séparation de feuilles lorsque la porte d'accès (112) est dans sa position fermée.

8. Ensemble selon la revendication 5, 6 ou 7, dans lequel l'appareil de manipulation de pile de feuilles (100) comprend en outre :
- un capteur de dimension de pile de feuilles conçu pour déterminer une dimension d'une pile de feuilles (S) sur le support de pile de feuilles (120) de l'appareil de manipulation de pile de feuilles (100), dans lequel le dispositif de commande est conçu pour commander le système d'actionnement d'élément de confinement pour déplacer l'élément de confinement de pile de feuilles (122A) au moins partiellement contre un côté de la pile de feuilles (S).

9. Ensemble selon l'une quelconque des revendications 5 à 8, comprenant en outre un autre élément de confinement de pile de feuilles (124A, 124B) pouvant être déplacé par un autre système d'actionnement d'élément de confinement pour confiner la pile de feuilles (S) dans une direction (Y) sensiblement perpendiculaire à une direction de confinement (X) de l'élément de confinement de pile de feuilles (122A).

10. Ensemble selon l'une quelconque des revendications précédentes, dans lequel l'appareil de manipulation de pile de feuilles (100) comprend en outre un plateau (110) monté de manière coulissante sur un châssis (101) de l'appareil de manipulation de pile de feuilles (100), dans lequel le plateau (110) maintient le support de pile de feuilles (120) de l'appareil de manipulation de pile de feuilles (100), et dans lequel la porte d'accès (112) forme un panneau avant (112) du chariot (110) par rapport à une direction de coulissement (Y) du plateau (110).

11. Ensemble selon la revendication 10, dans lequel le plateau (110) comprend une chambre d'entraînement (130) qui dans la position ouverte est accessible pour le robot de transport de pile de feuilles (200) dans une direction d'insertion (X) perpendiculaire à la direction de coulissement (Y).

12. Ensemble selon l'une quelconque des revendications précédentes, dans lequel l'appareil de manipulation de pile de feuilles (100) comprend en outre un actionneur de support de pile de feuilles destiné à déplacer le support de pile de feuilles (120) de l'appareil de manipulation de pile de feuilles (100) dans une direction de la hauteur (Z) perpendiculaire à un plan dudit support de pile de feuilles (120), et dans lequel le dispositif de commande (137) est conçu pour soulever le support de pile de feuilles (120) de l'appareil de manipulation de pile de feuilles (100) dans la direction de la hauteur (Z) depuis une position d'accès robot prédéterminée pour transférer une pile de feuilles (S) du support de pile de feuilles (220) du robot de transport de pile de feuilles (200) vers le support de pile de feuilles (120) de l'appareil de manipulation de pile de feuilles (100).

13. Appareil de manipulation de pile de feuilles (100) destiné à être utilisé dans l'ensemble selon l'une quelconque des revendications 1 à 12, comprenant :
- un support de pile de feuilles (120) destiné à supporter une pile de feuilles (S) de feuilles de support d'impression ;
- une porte d'accès (122) à travers laquelle porte d'accès (122) lorsqu'elle est dans une position ouverte, le support de pile de feuilles (120) est accessible ;
- un actionneur de porte d'accès destiné à ouvrir et fermer la porte d'accès (112) ;
- un récepteur de signaux sans fil conçu pour recevoir le signal d'identification provenant d'un robot de transport de pile de feuilles (200) ;
- un dispositif de commande (137) conçu pour :
- déterminer un identifiant de support d'impression pour un support d'impression destiné au support de pile de feuilles (120) ;
- comparer le signal d'identification reçu par le récepteur de signaux sans fil à l'identifiant de support d'impression ; et
- commander l'actionneur de porte d'accès pour ouvrir la porte d'accès (112) si le signal d'identification correspond à l'identifiant de support d'impression.

14. Robot de transport de pile de feuilles (200) destiné à être utilisé dans l'ensemble selon l'une quelconque des revendications 1 à 12, comprenant :
- un support de pile de feuilles (220) destiné à supporter une pile de feuilles (S) de feuilles de support d'impression ;
- un mécanisme d'entraînement (206) pour déplacer le robot de transport de pile de feuilles (200) ;
- un émetteur de signaux sans fil conçu pour émettre un signal d'identification pour le robot de transport de pile de feuilles (200) ; et
- un récepteur de signaux sans fil destiné à recevoir des signaux de commande depuis un appareil de manipulation de pile de feuilles (100) selon la revendication 13.

15. Procédé de distribution fluide d'une pile de feuilles (S) de feuilles de support d'impression entre le support de pile de feuilles (220) du robot de transport de pile de feuilles (200) selon la revendication 1 et le support de pile de feuilles (120) de l'appareil de manipulation de pile de feuilles (100) selon la revendication 1, le procédé comprenant les étapes de
a) détermination d'un premier moment et d'une première position pour le support de pile de feuilles (120) de l'appareil de manipulation de pile de feuilles (100) afin de distribuer ou de recevoir la pile de feuilles (S) pour au moins un travail d'impression dans la pile de feuilles (S),
b) détermination d'une position actuelle pour le support de pile de feuilles (220) du robot de transport de pile de feuilles (200),
c) détermination d'une vitesse et d'une trajectoire pour le robot de transport de pile de feuilles (200) de la position actuelle à la première position du support de pile de feuilles (120) de l'appareil de manipulation de pile de feuilles (100), la vitesse et la trajectoire étant optimisées pour conduire à un moment le plus proche égal ou postérieur au premier moment pour la distribution ou réception de la pile de feuilles (S), et
d) le robot de transport de pile de feuilles (200) se déplaçant de la position actuelle à la première position selon la vitesse et la trajectoire optimisées, et
e) distribution ou réception de la pile de feuilles (S) au niveau de la première position.
